(19) **Europäisches Patentamt**
**European Patent Office**
**Office européen des brevets**

(11) Publication number : **0 065 235 B2**

(12) # NEW EUROPEAN PATENT SPECIFICATION

(45) Date of publication of the new patent specification : **18.09.91 Bulletin 91/38**

(51) Int. Cl.⁵ : **B60G 15/06**

(21) Application number : **82103958.3**

(22) Date of filing : **06.05.82**

(54) **Strut type suspension.**

(30) Priority : **15.05.81 JP 72169/81**

(43) Date of publication of application : **24.11.82 Bulletin 82/47**

(45) Publication of the grant of the patent : **02.01.86 Bulletin 86/01**

(45) Mention of the opposition decision : **18.09.91 Bulletin 91/38**

(84) Designated Contracting States : **DE FR GB IT**

(56) References cited :
**DE-A- 2 360 149**
**DE-A- 3 014 869**
**DE-B- 1 195 180**
**DE-C- 1 116 261**
**FR-A- 2 268 659**
**GB-A- 1 022 603**
**US-A- 3 584 856**
**US-A- 4 175 771**
**US-A- 4 260 177**

(73) Proprietor : **NISSAN MOTOR CO., LTD.**
**No.2, Takara-cho, Kanagawa-ku**
**Yokohama-shi Kanagawa-ken 221 (JP)**
Proprietor : **KINUGAWA RUBBER IND. CO., LTD.**
**No. 330, Naganuma-cho**
**Chiba City (JP)**

(72) Inventor : **Kawaura, Takayoshi c/o Tsurumi Plan**
**Nissan Motor co., Ltd. No. 6-1, Daikoku-cho**
**Tsurumi-ku Yokohama City (JP)**
Inventor : **Kan, Hiroyashu c/o Tsurumi Plan**
**Nissan Motor co., Ltd. No. 6-1, Daikoku-cho**
**Tsurumi-ku Yokohama City (JP)**
Inventor : **Kyoi, Yuji**
**No. 2-10-18-503, Satsukiga-oka**
**Chiba City (JP)**

(74) Representative : **Patentanwälte Grünecker, Kinkeldey, Stockmair & Partner**
**Maximilianstrasse 58**
**W-8000 München 22 (DE)**

EP 0 065 235 B2

## Description

Strut type suspensions are in general so arranged that one end of a strut or a shock absorber cylinder is connected to vehicle wheels, and the other end or a shock absorber piston rod is connected to a vehicle body, thereby suspending a vehicle body, engine and power train above the wheels. The strut is connected to the vehicle body through an insulator mainly including an insulator rubber in order to prevent the vibration from the wheels from being transmitted to the vehicle body.

A coiled spring of the strut is usually disposed between an upper spring seat secured to a strut outer clyinder and a lower spring supported through the insulator rubber on the vehicle body, so that the spring action of the coil spring is effected between the strut outer cylinder and the piston rod. Accordingly, the coil spring is secured at its upper end to the vehicle body through the upper spring seat and the insulator rubber, and therefore a high unsprung weight is applied to the insulator rubber. As a result, in the case where the elastic modulus of the insulator rubber is ralatively low, the insulator rubber unavoidably deforms to an appreciable extent under a relatively strong external force due to the extension and contraction of the coil spring which supports the vehicle body weight, i.e. due to the vertical movement of the wheels. This not only requires a large space for the moving stroke of the suspension but also tends to lower the strength of the insulator rubber, thereby degrading the durability thereof. On the contrary, if the elastic modulus of the insulator rubber is increased, the insulator rubber cannot effectively absorb high frequency vibration which is to be transmitted thereto from the wheels through the shock absorber piston rod to the vehicle body, which high frequency vibration is mainly due to so-called stick phenomena or stationary relationship between the piston rod and the cylinder of the shock absorber. Such high frequency vibration is transmitted to the vehicle body, thus emitting noise. In this regard, the thus arranged conventional suspension cannot meet the above-mentioned conflict requirements, and consequently the elastic modulus of the insulator rubber is set unavoidably at a compromise value, taking the above conflict requirements into consideration.

In view of the above, a variety of propositions have been made to overcome the above-discussed drawbacks encountered in the conventional strut type suspension.

A MacPherson strut type suspension according to the preamble part of claim 1 is known from DE-A-30 14 869. This suspension comprises an insulator rubber element which is arranged for a substantially compressive deformation, and thereby a substantially different elastic regimes depending on amplitude of vibration cannot be achieved. Furthermore, in the downward stroke of the piston of this suspension, there is no clearance between a stop surface and the cover and therefore a dual elasticity characteristic in this direction of movement of the piston rod is not possible.

FR-A-22 68 659 discloses a suspension for a motor vehicle comprising a shock absorber operatively disposed between the vehicle wheels and the body and having a piston rod, a core member secured to the piston rod and an insulator rubber securely connected between the vehicle body and the piston rod. The core member is secured to the uppermost end of the piston rod and is of generally cylindrical shape, to whose outer circumferential surface said insulator rubber is secured. As shown particularly in figure 2 of FR-A-22 68 659, the insulator rubber is in the form of a ring, whose inner circumferential surface is secured to the core member of the piston rod and whose outer circumferential surface is secured to the vehicle body.

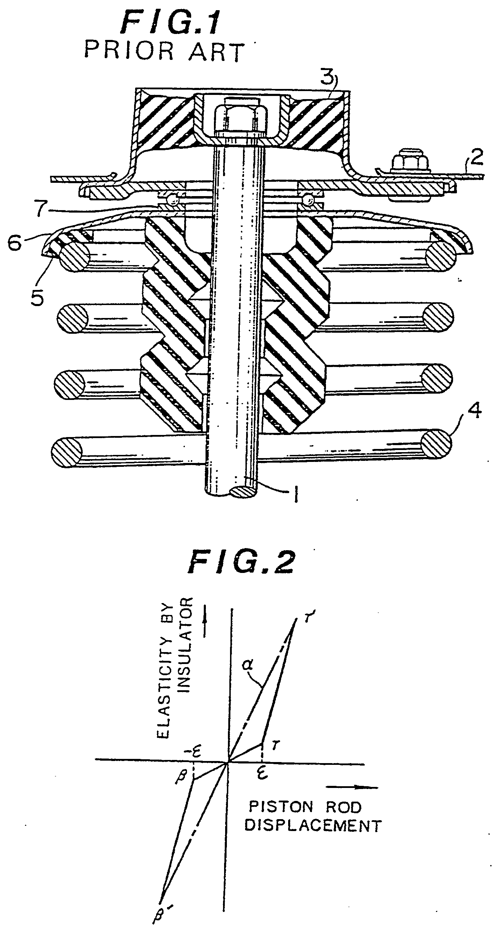

Therefore, all the forces which have to be transmitted from the piston rod to the vehicle body are submitted via said insulator rubber in a generally radial direction referred to the axis of the piston rod. Dependent on the elastic modulus of the insulator rubber, the insulator rubber deforms due to the external force transmitted from the vehicle wheel to the piston rod. In order to limit this deformation of the insulator rubber, a stop member is provided, which limits the upward movement of the piston rod. Nevertheless, it is not possible to obtain a sufficient vibration absorbing effect, which is necessary to avoid the drawbacks discussed in connection with Figure 1 of the specification of the present invention.

A vehicle spring suspension is known from GB-A-10 22 603, comprising a piston rod, an insulator rubber secured to the piston rod and secured to the vehicle body. The insulator rubber is in cross-section in the form of a heart and has a through-hole in its centre, to which a bush is secured, which is able to accept the upper end of the piston rod. The lower part of said insulator rubber is supported on a core member, which is an integral part of the piston rod. The upper end outer circumferential surface of the heart-formed insulator rubber is secured to the vehicle body by means of a casing, which is generally the same form as the upper end of said insulator rubber.

Therefore, the forces which have to be transmitted from the piston rod to the vehicle body are transmitted in a generally axial direction referred to the axis of the piston rod because of the support of the insulator rubber on the core member of the piston rod and to the casing of the vehicle body. Therefore, the axial movement of the piston rod is only limited by the insulator rubber or by the elastic modulus of the insulator rubber, respectively. consequently, this embodiment also has the drawbacks discussed in connection with the vibration absorption, which depends on the elastic modulus of said insulator rubber.

The technical problem underlying the invention is to provide a suspension of the type as indicated in the preamble portion of claim 1, whereby low amplitude high frequency vibration transmitted through the piston rod is absorbed effectively by the insulator rubber.

According to the present invention this technical problem is solved by a MacPherson strut type suspension as defined in claim 1.

Preferably, a coil spring is disposed in connection with the shock absrober to elastically support the vehicle body. The piston rod extends within the coil spring and is provided at its one end with the core member. The insulator rubber is securely connected between the core member and the vehicle body. When the axial movement of the piston rod in either direction exceeds a predetermined distance, the core member is restricted from further movements by the casing or cover respectively. With this arrangement, relatively low and high frequency vibrations applied from the vehicle wheels to the suspension can be effectively absorbed while prolonging the life of the insulator rubber.

Brief Description of the Drawings

The features and advantages of the suspension according to the present invention will be more clearly appreciated from the following description taken in conjunction with the accompanying drawings in which like reference numerals designate like parts and elements, and in which:

Fig. 1 is a cross-sectional view of an essential part of a conventional MacPherson strut type suspension;

Fig. 2 is a graph showing the elasticity characteristics of an insulator assembly of the present invention in comparison with that of the conventional suspension;

Fig. 3 is a cross-sectional view of an essential part of a preferred embodiment of a MacPherson strut type suspension in accordance with the present invention; and

Fig. 4 is a cross-sectional view of an essential part of a modified example of the suspension according to the present invention.

Detailed Description of the Invention

To facilitate understanding the present invention, a brief reference will be made to a conventional strut type suspension depicted in Fig. 1, which is one of the above-mentioned propositions for overcoming the above-discussed drawbacks.

In the conventional strut type suspension shown in Fig. 1, vertical external forces resulting from high frequency vibration, transmitted from vehicle wheels through a shock absorber piston rod 1 to a vehicle body 2, is absorbed by an insulator rubber 3. On the contrary, relatively large vertical external forces resulting from low frequency vibrations, transmitted from the wheels through the coil spring 4 to the vehicle body 2, is absorbed by an elastic member 5 interposed between the coil spring 4 and an upper spring seat 6, without depending upon the vibration absorbing action of the insulator rubber 3, by virtue of an arrangement in which the upper spring seat 6 is connected through a bearing 7 to the vehicle body 2.

However, even the thus arranged conventional suspension has encounted followed short-comings. The insulator rubber 3 is supplied with relatively high vibration amplitude external force when the wheels abruptly move upward and downward with high amplitude, in addition to the above-mentioned high frequency vibration external force. Accordingly, if the elastic modulus of the insulator rubber 3 is too low, the insulator rubber deforms substantially thereby deteriorating its durability, while not generating vibration-damping force thereby degrading vibration-suppression effects. In this regard, the elasticity variation (elastic modulus) of the insulator rubber 3 must be increased to some extent, for example, as indicated by a in Fig. 2. As a result, the insulator rubber cannot sufficiently absorb high frequency vibration generated within a region where the displacement of the piston rod 1 is relatively small, and therefore it is impossible to expect a desirable vibration-suppression effect.

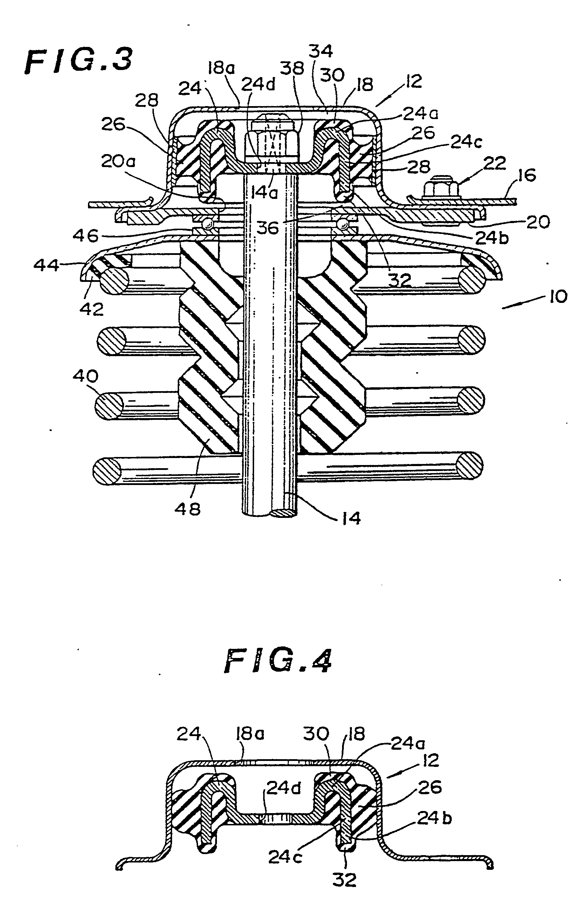

In view of the above description of the conventional strut type suspension which has been improved to some extent, reference is now made to Figs. 3 and 4, more particularly to Fig. 3 wherein a preferred embodiment of a MacPherson strut type suspension of the present invention is illustrated by the reference numeral 10. The suspension 10 comprises an insulator or insulator assembly 12 through which a piston rod 14 forming part of a shock absorber is connected to a vehicle body 16 in an insulating manner. The shock absorber includes, as usual, a cylinder (not shown) into which the piston 14 is movably disposed, the cylinder being connected to vehicle wheels (not shown).

The insulator assembly 12 includes a casing 18 and a cover 20 which are both secured to the vehicle body 16 by bolt-and-nut connection 22. A rigid core member 24 is movably disposed within the casing 18 and formed with annular upper and lower stop sections 24a, 24b which are located opposite generally in the axial direction of the core member 24. The core member 24 is further formed with a cylindrical section 24c which is located to integrally connect the upper and lower stop sections 24a, 24b. The core member 24 is connected at its cylindrical section 24c with a cylindrical member 28 through an insulator 26 which is bonded on the core member 24 and the cylindrical member 28 by adhesion due to vulcanization. The cylindrical member 28 is press-fitted into the casing 18 and rigidly secured on the inner wall surface of the casing 18.

The upper and lower stop sections 24a, 24b of the core member 24 are respectively provided with annular upper and lower elastic or elastomeric members 30 and 32 which are bonded onto the upper and lower stop sections 24a, 24b by adhesion due to vulcanization. In this instance, these elastic members 30, 32 are integral with the insulator rubber 26. The elastic members 30, 32 are located to be opposite to the casing (18) inner wall surface and the cover (20) inner wall surface, respectively. The rigid member 24 is so located that an upper clearance 34 is formed between the upper elastic member 30 and the inner wall surface of the casing 18, while a lower clearance 36 is formed between the lower elastic member 32 and the inner wall surface of the cover 20. It will be understood that the upper and lower elastic members 30, 32 may be bonded on the inner wall surfaces of the casing 18 and the cover 20, respectively, in place of the core member 24.

The piston rod 14 is located to pass through a central opening 20a of the cover 20 and formed at an upper end with a slender tip section 14a whose cross-section is non-circular. The non-circular tip section 14a is inserted into a central opening 24d of the core member 24, which central opening has a non-circular cross-section corresponding to that of the tip section 14a. The tip section 14a of the piston rod 14 is secured to the core member 24 by installing a nut 38 so that the threaded sections of the piston rod tip section 14a and the nut 38 engage with each other. The tightening of the nut 38 is carried out with a socket wrench (not shown) inserted into the casing 18 through a central opening 18a of the casing 18.

A coil spring 40 is disposed around the shock absorber and seated at its lower end section on a lower spring seat (not shown) which is secured to a strut outer cylinder (not shown) in which the shock absorber cylinder is disposed. As shown, the upper end section of the coil spring 40 is seated through an annular elastic or elastomeric member 42 on an upper spring seat 44. A bearing 46 is disposed between the upper spring seat 44 and the cover 20 of the insulator assembly 12, so that the upper spring seat 44 is supported rotatably relative to the vehicle body 16.

A bumper rubber 48 secured to the upper spring seat 44 is disposed around the piston rod 14 and extends downward along the axis of piston rod 14. This bumper rubber 48 serves to receive under damping action an end surface of the shock absorber cylinder from which the piston rod 14 projects, when the shock absorber cylinder ascends to a level in the vicinity of an upper limit position thereof under the upward movement of the vehicle wheels.

In operation of the thus arranged suspension, relatively large vertical external force, transmitted from the vehicle wheels through the coil spring 40 or the bumper rubber 48, acts on the elastic member 42 to elastically deform it without via the insulator rubber, and thereafter transmitted to the vehicle body 16 via the upper spring seat 44, the bearing 46 and the insulator assembly cover 20. Thus, the shock due to such vertical external force is absorbed by the elastic deformation of the elastic member 42.

Vertical external force, transmitted from the vehicle wheels through the piston rod 14, acts on the core member 24 to elastically deform the insulator rubber 26 in case where the external force is of high frequency vibration in which the vibration amplitude is low. And the external force is then transmitted through the cylindrical member 28 and the insulator assembly casing 18 to the vehicle body 16. It is to be noted that the elastic modulus of the insulator rubber 26 is set as low as possible as indicated by β—y in Fig. 2, by which the high frequency vibration is certainly abosrbed by the deformation of the insulator rubber 26 to improve vibration suppression effect, thus effectively preventing the generation of noise due to the high frequency vibration.

In case where the vertical external force is a high frequency vibration of larger amplitude, the external force largely deforms elastically the insulator rubber 26 since the elastic modulus of the insulator rubber 26 is set lower as mentioned above. Then, the upper and lower stop sections 24a, 24b of the core member 24 strike against the insulator assembly casing and cover 18, 20, thereby elastically deforming or compressing the elastic members 30, 32. As a result, when the external force, by which the vertical displacement of the piston rod 14 is not less than $\pm\varepsilon$ as indicated in Fig. 2, applied to the suspension 10, the compression reaction of the elastic member 30 or 32 is added to the elasticity of the insulator rubber 26, so that the elasticity or elastic modulus exhibited by the insulator assembly 12 of the present invention is enlarged as indicated by Y—Y' or ββ' in Fig. 2.

As discussed above, although the elastic modulus of the insulator rubber 26 is lowered for the purpose of improving vibration suppression effect as mentioned above, the insulator rubber 26 is prevented from its excessive deformation even upon the external force of the high amplitude vibration applied through the piston rod 14. Accordingly, the insulator assembly 12, as a whole, exhibits the damping effect on such external force, thereby sufficiently improving the vibration suppression effect while prolonging the life of the insulator rubber 26. Besides, in this instance, the insulator rubber 26 is secured to the piston rod 14 and the insulator assembly casing 18, and accordingly the insulator rubber 26 is prevented from wearing. In this connection, although the elastic modulus of the insulator rubber 26 is set lower, the insulator rubber undergoes compressive deformation upon receiving lateral input force, and therefore good drivability is maintained.

While the insulator rubber 26 has been shown and described to be secured through the cylindrical member 28 to the insulator assembly casing 18, it will be appreciated that the insulator rubber 26 may be directly secured at its outer surface to the inside wall surface of the insulator assembly casing 18 as shown in Fig. 4, by means of socalled post-bonding or sticking after assembly. Additionally, the elasticity variation characteristics on piston rod displacement, of the insulator assembly 12 is not limited to that shown in Fig. 2, it will be understood that the elasticity variation characteristics of the insulator assembly 12 can be varied by varying the distance of the clearances 34, 36, the material and the shape of the insulator rubber 26 and elastic stop members 30, 32 in order that it matches various requirements.

As appreciated from the above, in the MacPherson strut type suspension, the external force from the piston rod is absorbed by the deformation of the insulator rubber secured to the vehicle body and the core member fixed on the piston rod of the shock absorber in case where the external force is low in vibration amplitude; whereas the external force from the piston rod is regulated under the moving stop action of the core member stop sections in co-operation with insulator assembly casing and cover in the case where the external force is high in vibration amplitude. Accordingly, the suspension according to the present invention can meet a difficult requirement of suppressing both high and low amplitude vibrations by suitably selecting the elastic modulus of the insulator rubber. Furthermore, the insulator rubber is prevented from excessive deformation thereby improving the durability thereof, and it is sufficient that the space for the operational stroke of the suspension is smaller thereby providing an advantage in design. Moreover, since the insulator rubber is fixed to the vehicle body and the piston rod, it is prevented from wearing. Additionally, the insulator rubber is high also in its lateral direction rigidity, and therefore good drivability is obtined.

## Claims

1. A McPherson strut type suspension (10) for a motor vehicle comprising a shock absorber operatively disposed between the vehicle wheels and the vehicle body (16) and having a piston rod (14), a core member (24) secured to the uppermost end of the piston rod (14), and an insulator rubber element (26) securely connected between said vehicle body (16) and the core member (24), and further comprising a casing (18) formed in the vehicle body (16) for receiving the end portion of said piston rod (14), and a cover (20) rigidly connected to the vehicle body (16) and defining a space between the casing (18), and the cover (20), the core member (24) being movably disposed within said space such as to restrict the movement of said piston rod (14) in both axial directions, being characterised in

that the axial outermost end surfaces of the core member (24) define upper and lower annular stop-sections which are located opposite to and spaced from the casing (18) and the cover (20), respectively,

that the insulator rubber element (26) has a substantially annular form the inner portion of which is secured to the core member and the outer surface of which is connected to the inner wall surface of the casing (18), and there being a clearance provided between the upper and lower surfaces of said insulator rubber element and the inner wall surfaces of the casing (18) and the cover (20), respectively, and

that the lower annular stop-section (24b) includes a lower elastic member (32) secured thereto, and the upper annular stop-section (24a) includes an upper elastic member (30), and that said upper elastic member (30) is so located as to form an upper clearance (34) between it and the inner wall surface of said casing (18), said lower elastic member (32) being so located as to form a lower clearance (36) between it and the inner wall surface of said cover (20).

2. A suspension as claimed in Claim 1, wherein said upper and lower elastic members (30, 32) are integral with said insulator rubber (26).
(Figs. 3 & 4)

3. A suspension as claimed in Claim 2, wherein said core member (24) includes a cylindrical section (24c) integrally connecting said upper and lower stop sections (24a, 24b) and arranged coaxially with said shock absorber piston rod (14), a major part of said insulator rubber (26) being secured to said core member cylindrical section (24c).
(Figs. 3 & 4)

4. A suspension as claimed in Claim 3, further comprising a cylindrical member (28) to which said insulator rubber (26) is secured, said cylindrical member (28) being fixedly connected to the inner wall surface of said casing (18).
(Fig. 3)

## Patentansprüche

1. McPherson-Aufhängung (10) mit Federballen für ein Kraftfahrzeug mit einem Stoßdämpfer, welcher wirksam zwischen Fahrzeugrädern und der Fahrzeugkarosserie (16) angeordnet ist und eine Kolbenstange (14), ein Kernstück (24), welches am obersten Ende der Kolbenstange (14) befestigt ist, und ein Isoliergummielement (26) aufweist, welches fest zwischen der Fahrzeugkarosserie (16) und dem Kernstück (24) angeordnet ist, und wobei die Aufhängung ferner ein Gehäuse (18), welches an der Fahrzeugkarosserie (16) zur Aufnahme des Endteils der Kolbenstange (14) ausgebildet ist, und eine Abdeckung (20) aufweist, welche fest mit der Fahrzeugkarosserie (16) verbunden ist und zusammen mit dem Gehäuse (18) und der Abdeckung (20) einen Zwischenraum bildet, wobei das Kernstück (24) im Zwischenraum bewegbar derart angeordnet ist, daß die Bewegung der Kolbenstange (14) in beiden axialen Richtungen begrenzt wird, dadurch gekennzeichnet,

daß die axialen äußersten Stirnflächen des Kernstückes (24) obere und untere Anschlagabschnitte bilden, welche jeweils gegenüberliegend und mit einem Abstand zum Gehäuse (18) und der Abdeckung (20) angeordent sind,

daß das Isoliergummielement (26) eine im wesentlichen ringförmige Form aufweist, dessen innerer Teil an dem Kernstück befestigt ist und dessen Außenfläche mit der Innenwandfläche des Gehäuses (18) verbunden ist, wobei ein Abstand zwischen den oberen und unteren Flächen des Isoliergummielementes und den Innenwandflächen des Gehäuses (18) bzw. der Abdeckung (20) vorgesehen ist, und

daß der untere Anschlagabschnitt (24b) ein unteres elastisches Teil (32), das an ihm befestigt ist, aufweist, und daß der obere ringförmige Anschlagschnitt (24a) ein oberes elastisches Teil (30) aufweist und daß das obere elastische Teil (30) derart angeordnet ist, daß ein oberer Zwischenraum (34) zwischen ihm und der Innenwandfläche des Gehäuses (18) gebildet wird, wobei das untere elastische Teil (32) derart angeordnet ist, daß ein unterer Zwischenraum (36) zwischen ihm und der Innenwandfläche der Abdeckung (20) gebildet ist.

2. Aufhängung nach Anspruch 1, wobei die oberen und unteren elastischen Teile (30, 32) einstückig mit dem Isoliergummi (26) ausgebildet sind.

(Fig. 3 und 4 ).

3. Aufhängung nach Anspruch 2, wobei das Kernstück (24) einen zylindrischen Abschnitt (24c) aufweist, welcher einstückig die oberen und unteren Anschlagabschnitte (24a, 24b) verbindet und koaxial zu der Kolbenstange (14) des Stoßdämpfers angeordnet ist, wobei ein größerer Teil des Isoliergummis (26) an dem zylindrischen Abschnitt (24c) des Kernstücks befestigt ist.

(Fig. 3 und 4).

4. Aufhängung nach Anspruch 3 mit einem zylindrischen Teil (28), an welchem der Isoliergummi (26) befestigt ist, wobei das zylindrische Teil (28) fest an der inneren Wandungsfläche des Gehäuses (18) befestigt ist.

(Fig. 3).

## Revendications

1. Suspension du type McPherson à jambe (10) pour un véhicule automobile comprenant un amortisseur disposé de façon fonctionnelle entre les roues du véhicule et la caisse du véhicule (16) et possédant une tige de piston (14), un organe de corps (24) fixé à l'extrémité la plus élevée de la tige de piston (14), ainsi qu'un élément d'isolation en caoutchouc (26) connecté de façon fixe entre la caisse du véhicule (16) et l'organe de corps (24), et comprenant en outre un boîtier (18) formé dans la caisse du véhicule (16) de manière à recevoir la portion d'extrémité de ladite tige de piston (14) et un couvercle (20) connecté rigidement à la caisse du véhicule (16) et définissant un espace entre le boîtier (18) et le couvercle (20), l'organe de corps (24) étant disposé de façon déplaçable à l'intérieur de cet espace, de manière à limiter le mouvement de ladite tige de piston (14) suivant les deux sens axiaux, caractérisée en ce que les surfaces d'extrémité axiales les plus vers l'extérieur de l'organe de corps (24) définissent des sections d'arrêt anulaires supérieure et inférieure qui sont situées à l'opposé et à distance du boîtier (18) et du couvercle (20), respectivement,

et l'élément isolant en caoutchouc (26) possède une forme substantiellement annulaire dont la portion interne est fixée à l'organe de corps et la surface externe est connectée à la surface de paroi interne du boîtier (18), un évidement étant prévu entre les surfaces supérieure et inférieure de l'élément isolant en caoutchouc et les surfaces de paroi internes du boîtier (18) et du couvercle (20), respectivement,

et la section d'arrêt annulaire inférieure (24b) comporte un organe élastique inférieur (32) fixé à celle-ci et la section d'arrêt annulaire supérieure (24a) comprend un organe élastique supérieur (30), ledit organe élastique supérieur (30) étant disposé de manière à former un espace vide supérieur (34) entre lui et la surface de paroi interne du boîtier (18), l'organe élastique inférieur (32) étant disposé de manière à former un espace vide inférieur (36) entre lui et la surface de paroi interne dudit couvercle (20).

2. Suspension selon la revendication 1, dans laquelle lesdits organes élastiques supérieur et inférieur (30, 32) sont formés de manière intégrale avec l'isolant en caoutchouc (26).

(Figures 3 & 4).

3. Suspension selon la revendication 2, dans lequel l'organe de corps (24) comprend une section cylindrique (24c) connectée de façon intégrale aux sections d'arrêt supérieure et inférieure (24a,24b) et disposée coaxialement à la tige de piston d'amortisseur (14), et une majeure partie de l'isolant en caoutchouc (26) étant fixée à la section cylindrique de l'organe de corps (24c).

(Figures 3 & 4).

4. Suspension selon la revendication 3, comprenant en outre un organe cylindrique (28) auquel ledit isolant en caoutchouc (26) est fixé, cet organe cylindrique (28) étant connecté de façon fixe à la surface de paroi interne dudit boîtier (18).

(Figure 3).

EP 0 065 235 B2

# FIG.1
## PRIOR ART

# FIG.2

# FIG.3

# FIG.4